# EUROPÄISCHE PATENTSCHRIFT

(11) **EP 1 537 970 B1**
(45) Veröffentlichungstag und Bekanntmachung des Hinweises auf die Patenterteilung: **14.04.2010**
(21) Anmeldenummer: 04028701.3
(22) Anmeldetag: 03.12.2004
(51) Int. Cl.: B29C 37/04, B23C 3/12

(54) **Verputzvorrichtung**
Deburring device
Dispositif d'ébarbage

(30) Priorität: 04.12.2003 DE 20318942 U
(43) Veröffentlichungstag der Anmeldung: 08.06.2005
(73) Patentinhaber: Urban GmbH & Co. Maschinenbau KG, 87700 Memmingen (DE)
(72) Erfinder: Jägg, Josef, 88450 Berkheim (DE)
(74) Vertreter: Pfister, Stefan Helmut Ulrich

(56) Entgegenhaltungen:
- DE-A1- 3 020 739
- DE-A1- 4 018 145
- DE-U1- 7 821 618
- DE-U1- 9 106 839
- DE-U1- 9 305 046

## Beschreibung

Die Erfindung betrifft die Verwendung einer Verputzvorrichtung für aus zusammengeschweißten Kunststoffprofilen bestehende Rahmen oder Rahmenteile, für Fenster, Türen oder dergleichen, wobei die Verputzvorrichtung ein rotierendes, spanabhebendes Werkzeug aufweist, welches zum Abtragen der an der Schweißnaht des Kunststoffprofiles überstehenden Schweißraupe dient.

Eingangs beschriebene Verputzvorrichtungen werden dafür eingesetzt, die an der Schweißnaht in Folge eines Stumpfschweißvorganges entstandenen, nach außen überstehende Schweißraupe zu entfernen. In einem Stumpfschweißen werden dabei die auf Gehrung geschnittenen Kunststoffprofile zum Beispiel zu einem Fenster- oder Türrahmen oder dergleichen verschweißt. Da die Kunststoffprofile auf Gehrung geschnitten sind, verläuft auch die Ebene der Schweißnaht unter einem entsprechenden Gehrungswinkel. Werden Kunststoffprofile zum Beispiel in einem rechten Winkel miteinander verschweißt, so beträgt die Gehrung 45° zu dem benachtbarten, miteinander verschweißten Rahmenteilen.

Im Stand der Technik ist zum Beispiel die europäische Patentschrift 350 832 bekannt. Hier ist eine Außeneckverputzvorrichtung für Fensterrahmen oder dergleichen beschrieben. Als spanabhebendes Werkzeug wird hier ein Kreissägeblatt eingesetzt. Des Weiteren ist eine Tastvorrichtung vorgesehen, die mit einer Steuerung verbunden ist. Die Tastvorrichtung weist dazu einen mit dem Kreissägeblatt und relativ zu diesem, dazu axial bewegbaren Taster auf, der den Rahmen antastet. Dazu tastet der Taster die Fensterrahmen an einer Taststelle an, die in der Ebene des Kreissägeblattes liegt und gegenüber der Bearbeitungsstelle seitlich zum Fensterrahmen hin versetzt ist. Hierdurch wird durch die Taster eine Auslenkung in der Rahmenebene und senkrecht hierzu in eine radiale beziehungsweise axiale Bewegung des Kreissägeblattes geschaltet.

Letztendlich wird im Stand der Technik mit Tastern die Kontur abgetastet und ein Kreissägenblatt aufgrund der Stellung der Taster gesteuert.

Eine solche Vorgehensweise ist vielleicht noch bei verhältnismäßig groben Profilkonturen einsetzbar, da natürlich die endliche Breite des Kreissägeblattes sowie auch die endliche Breite der Taster die Genauigkeit der Bearbeitung letztendlich definieren. Filigranere Profile werden allerdings mit dieser Vorgehensweise optisch beschädigt oder der Schweißwulst nicht vollständig entfernt. Dies ist nicht erwünscht.

Des Weiteren ist zu beachten, daß die Abtastung nicht tatsächlich an der Schweißraupe erfolgt, sondern seitlich versetzt. Dies führt dazu, daß nicht tatsächlich der Oberflächenbeziehungsweise Konturverlauf im Gehrungsbereich erfaßt wird, sondern ein Konturverlauf der seitlich daneben liegt und gegebenenfalls zum Beispiel der Querschnittsfläche (einem rechtwinkligen Schnitt) entspricht. Hieraus resultieren Maßungenauigkeiten.

Letztendlich ist auch die Ausgestaltung mit den Tastern widersprüchlich, da für ein möglichst exaktes Ergebnis die Taster sehr klein und filigran ausgebildet sein müssen, um den Konturenverlauf optimal zu folgen, auf der anderen Seite aber zu beachten ist, daß die Taster in Verbindung stehen mit einer Anordnung, die eine erhebliche Masse besitzt. Bei einem unbeabsichtigten Heranfahren der gesamten Anordnung können die Taster unter Umständen leicht Schaden nehmen. Des Weiteren ist zu beachten, daß die Abtastung permanent zu erfolgen hat, also auch während der spanablösenden Bearbeitung und herumfliegende Späne gegebenenfalls in den Spalt zwischen Taster und Profil gelangen können, und so das Abtastergebnis möglicherweise verfälschen, wodurch natürlich auch die Bearbeitung möglicherweise mißlingt.

Aus der Druckschrift DE 78 21 618 ist ein mehrstufiger Scheibenfräser für das Abtragen einer Schweißraupe bekannt. Die Kontur dieses Scheibenfräsers entspricht nicht dem Oberflächenverlauf des Kunststoffprofils im Schweißnahtbereich an der Oberfläche beziehungsweise Sichtfläche des Kunststoffprofiles.

Aus der Druckschrift DE 93 05 046 ist eine Vorrichtung zum Putzen der beim Verschweißen von Kunststoffprofilen entstehenden Schweißwülste bekannt. In dieser Druckschrift ist auch ein Profilfräser erwähnt. Auch in dieser Druckschrift geht es darum, dass mit mehreren Konturenfräsern der Eckbereich bearbeitet wird. Aus der Figur ist dabei ersichtlich, dass die Vorrichtung nicht geeignet ist, die Sichtfläche beziehungsweise Oberfläche des Kunststoffprofiles bezüglich der Schweißnaht zu bearbeiten.

Aus der Druckschrift DE 40 18 145 ist des Weiteren eine Verputzvorrichtung für Fensterrahmen oder dergleichen bekannt, wobei hier ein scheibenförmiger Kunststofffräser beschrieben ist, der, um der Kontur des Profils zu folgen, entsprechend gesteuert werden muss. Auch dieser Konturfräser ist nicht dafür geeignet, den Oberflächenverlauf (Sichtbereich) im Schweißnahtbereich zu bearbeiten.

Die Erfindung hat es sich zur Aufgabe gemacht, eine Verputzvorrichtung wie eingangs beschrieben, dahingehend zu verbessern, daß das Bearbeitungsergebnis beim Abarbeiten der Schweißraupe verbessert wird.

Zur Lösung dieser Aufgabe geht die Erfindung aus von einer Verputzvorrichtung wie eingangs beschrieben und schlägt die Merkmale des Anspruchs 1 vor.

Die Erfindung schlägt vor, daß anstelle eines Kreissägeblattes ein Konturfräser eingesetzt wird. Dabei ist der Konturfräser so ausgestaltet, daß dessen Kontur dem Oberflächenverlauf des Kunststoffprofiles im Schweißnahtbereich entspricht und somit optimal angepaßt ist. Hierbei wird berücksichtigt, daß im Schweißnahtbereich die Kunststoffprofile stumpf, unter Gehrung miteinander verschweißt sind und der Oberflächenverlauf im Schweißnahtbereich nicht unbedingt dem Querschnitt des Kunststoffprofiles entspricht. Somit wird das Werkzeug exakt dem gewünschten Oberflächenverlauf angepaßt, wodurch automatisch eine sehr hohe, optische Güte der Schweißnahtbearbeitung entsteht, die mit den Kreissägeblättern aufgrund der endlichen Breite der Kreissägeblätter nicht erreichtbar ist.

Es folgt unmittelbar eine Verbesserung des Ergebnisses bei der erfindungsgemäßen Verwendung der Verputzvorrichtung.

Die beiden miteinander zu verschweißenden Kunststoffprofile spannen zwischen sich bereits eine Ebene auf, die hinterher der Rahmenebene entsprechen wird. Im Sinne der Erfindung wird daher als Rahmenebene die Ebene vestanden, die zumindest durch zwei miteinander verschweißten Kunststoffprofilen beziehungsweise Rahmenteile beziehungsweise Rahmen definiert ist.

Natürlich versteht die Erfindung unter dem Begriff Rahmen auch Rahmenteile, die zum Beispiel aus nur zwei Kunststoffprofilen verschweißt sind, zum Beispiel weil diese Elemente dann hinterher im Verbund mit anderen Rahmenteilen oder Rahmen zu Verbinden sind. Im Sinne der Erfindung wird daher unter Rahmen auch Teile des Rahmens, zumindest bestehend aus zwei miteinander verschweißten Kunststoffprofilen verstanden.

Die Erfindung wird dabei bevorzugt zum Abtragen der Schweißraupe am Außeneck zweier winklig verschweißter Kunststoffprofile eingesetzt. Hierauf ist die Erfindung aber nicht festgelegt. Die Erfindung ist auch bei zwei stumpf, nicht winklig miteinander verschweißten Kunststoffprofilen auf beiden Seiten des Kunststoffprofiles einsetzbar. Insbesondere der sichtbare Rahmenbereich des Überschlages wird im Gehrungsbereich durch die Erfindung optimal bearbeitet.

Die Kontur des Konturfräsers entspricht dem gewünschten Oberflächenverlauf des Kunststoffprofiles. Die Kontur kann einer kontinuierlich verlaufenden Linie folgen. Nach einer Ausführung der Erfindung ist jedoch vorgesehen, daß der Konturfräser entlang seiner Rotationsachse Abstufungen aufweist. Diese Abstufungen können jeweils in gleich großen Stufen gebildet sein. Nach einer Variante der Erfindung sind die Abstufungen unterschiedlich groß gewählt. Dies bietet die Möglichkeit, den Konturfräser dem unterschiedlichen Oberflächenverlauf der Kunststoffprofile anzupassen.

Nicht nur ein kontinuierlicher oder stufenförmiger Verlauf der Oberfläche des Konturfräsers ist möglich, sondern auch die Kombination von kontinuierlichem und stufenförmigem Verlauf. Ein kontinuierlicher Verlauf kann einer geraden oder gekrümmten Bahn folgen, wobei die Gerade gegenüber der Rotationsachse parallel oder in einem Winkel angeordnet ist. Die gekrümmte Bahn kann einem Kreis, einer Kurve oder einer geschwungenen Linie folgen. Auch andere als hier aufgeführte Verläufe sind für die Oberfläche des Konturfräsers nicht ausgeschlossen.

Zur Bearbeitung des Kunststoffprofiles ist die Oberfläche des Konturfräsers mit spanabhebenden Schneiden versehen. Zumindest zwei Schneiden umlaufen auf Flugkreisen mit unterschiedlichem Durchmesser die Rotationsachse des Konturfräsers. Diese beiden Schneiden sind nach einer Ausführung der Erfindung auf zwei Scheiben mit unterschiedlichen Durchmessern angeordnet. Der Konturfräser besteht nach einer weiteren Ausführung der Erfindung aus einer Vielzahl von Scheiben, die jeweils zumindest eine Schneide tragen. Die Schneiden selbst sind zum Teil gerade oder gekrümmt ausgebildet. Zusammen bilden sie die Oberflächenkontur des Fräsers mit seinen Abstufungen, Vorsprüngen oder gekrümmten Linien. Ein Vorteil eines derartigen Konturfräsers liegt darin, daß die einzelnen Scheiben gegebenenfalls unterschiedlich zusammengesetzt werden können. Auch ist es möglich, bei einem Verschleiß der Schneide, die entsprechende Scheibe leicht auszuwechseln. Dies verkürzt während der Fertigung Ausfallzeiten der Maschine.

Ebenfalls ist vorgesehen, den Konturfräser nicht aus einzelnen Scheiben zusammenzustellen, sondern aus einem einstückigen, rotatorischen, mit Abstufungen oder Vorsprüngen versehenen Grundkörper auszubilden. Die spanabhebenden Schneiden sind an seinem Umfang angeordnet. Zumindest jeder Stufe ist wenigstens eine Schneide zugeordnet. Die Vorsprünge sind ebenfalls durch Schneiden gebildet, wobei deren Breite gegebenenfalls schmaler ist, als die der übrigen Schneiden.

In einer bevorzugten Ausgestaltung der Erfindung ist vorgesehen, daß die Verputzvorrichtung zwei winklig, bevorzugt rechtwinklig angeordnete Anschläge aufweist und die Kunststoffprofile des Rahmens je an einem Anschlag anliegen.

Üblicherweise werden rechtwinklige Rahmen hergestellt, die mit der Verputzvorrichtung noch zu behandeln sind. Es ist aber auch möglich, jeden beliebigen anderen Winkel in einem Rahmen zu verarbeiten und dann hinterher beim Abtragen der vorstehenden Schweißraupe die Erfindung einzusetzen, wobei dann die Verputzvorrichtung zwei winklig angeordnete Anschläge aufweist, die einen Winkel miteinander einschließen, der üblicherweise dem doppelten Gehrungswinkel entspricht. Der Anschlag ist dabei so großflächig ausgebildet, daß dieser sicher und satt an dem jeweiligen Kunststoffprofil anliegt. Dabei ist der Anschlag entsprechend groß ausgestaltet, damit dieser, auch wenn die Verputzvorrichtung mit einem gewissen Impuls an das Kunststoffprofil herangeführt wird, der Anschlag maßgenau bleibt und nicht beschädigt wird. Dabei stellt der Anschlag die relative Lage des Konturfräsers zur zum bearbeitenden Bereich bereits ein.

Des Weiteren schlägt die Erfindung vor, daß die Verputzvorrichtung einen Niederhalter aufweist, der im Wesentlichen rechtwinklig zur Rahmenebene wirkt. Insbesondere in Kombination mit den beiden winklig angeordneten Anschlägen wird dadurch erreicht, daß die Verputzvorrichtung bezüglich der drei Raumkoordinaten im Verhältnis zu dem zu bearbeitenden Schweißnahtbereich exakt positionierbar ist. Dabei wirken bevorzugt die beiden Anschläge in der Rahmenebene oder in einer Ebene die hierzu parallel ist, der Niederhalter wirkt hierzu anschlagartig rechtwinklig. Gegebenenfalls dient der Niederhalter auch zum exakten Aufdrücken des Rahmen auf einer Oberfläche.

Die Anordnung der Anschläge beziehungsweise des Niederhalters sind an der Verputzvorrichtung angeordnet. Letztendlich kommt es aber auf die genaue Ausrichtung der Anschläge und des Niederhalters bezüglich des Konturfräsers für ein vollbefriedigendes Arbeitsergebnis an. Der Vorteil der Anordnung der Anschläge und des Niederhalters an der Verputzvorrichtung liegt insbesondere darin, daß es auf die genaue Spannung des Rahmens auf dem Bearbeitungstisch nicht ankommt, da die Verputzvorrichtung durch die drei Punkte, den beiden Anschlägen und den Niederhalter, sich die jeweilige Bearbeitungsposition zum Abtragen der Schweißraupe selber exakt sucht, findet und bearbeitet. Gegebenenfalls sind aber in den Anschlägen entsprechende Sensoren für das exakte Anliegen des Rahmens an den Anschlägen vorgesehen, um auch bei der anderen Variante eine höchste Bearbeitungsqualität zu erreichen.

In einer bevorzugten Anordnung der Erfindung ist vorgesehen, daß die Rotationsachse des Konturfräsers rechtwinklig zur Rahmenebene orientiert ist. Eine solche Ausgestaltung erlaubt es, den Rotationsantrieb über dem Rahmen anzuordnen, wo dieser nicht stört. Dabei ist es natürlich möglich, die Rotationsachse des Konturfräsers auch winklig beziehungsweise parallel zur Rahmenebene zu orientieren, der Konturfräser ist dann entsprechend anders ausgebildet.

Für eine exakte Positionierung der Verputzvorrichtung ist vorgesehen, daß diese sowohl rechtwinklig zur Rahmenebene wie auch parallel zur Rahmenebene bewegbar ist. Insbesondere wenn die Verputzvorrichtung mit Anschlägen und Niederhalter ausgestattet ist, kommt es auf die genaue Position der zu bearbeitenden Schweißverbindung nicht an, weil die Verputzvorrichtung aufgrund der Führung durch die Anschläge und den Niederhalter die jeweilige Bearbeitungsposition exakt trifft. Eine Beweglichkeit bezüglich der Rahmenebene und rechtwinklig hierzu ist dabei eine Möglichkeit, eine andere Möglichkeit besteht darin, die Verputzvorrichtung entlang anderer orientierter Achsen im Raum zu bewegen. Auch dies zählt zur Erfindung.

Dabei ist es von Vorteil, daß die Verputzvorrichtung in Richtung der Rotationsachse bewegbar ist, wobei dies in einer Variante der Erfindung auch gleichzeitig rechtwinklig zur Rahmenebene ist.

In einer bevorzugten Ausgestaltung der Erfindung ist vorgesehen, daß die Lage des Konturfräsers bezüglich der Anschläge beziehungsweise dem Niederhalter zwar einstellbar, im Einsatz der Verputzvorrichtung aber festgelegt ist. Durch die Einstellbarkeit bezüglich der Anschläge beziehungsweise des Niederhalters wird der Konturfräser in seiner Bearbeitungsposition bezüglich der Kanten des Profiles beziehungsweise deren Deckflächen, also denjenigen Flächen beziehungsweise Kanten, die mit dem Anschlag beziehungsweise Niederhalter zusammenwirken, ausgerichtet, um ein optimales Bearbeitungsergebnis zu erreichen.

Eine eleganten Weise den Niederhalter sowohl als Fixierelement des Rahmens wie auch als Anschlag für die Bewegung des Konturfräsers in Richtung auf die abzutragende Schweißraupe besteht darin, daß der Niederhalter an der Verputzvorrichtung federgelagert gehalten ist. Durch die Federkraft wird der Rahmen durch die Niederhalter festgehalten.

Die Erfindung zeigt daher mehrere Varianten, wie die erfindungsgemäße Verwendung der Verputzvorrichtung mit dem Konturfräser vorgesehen werden kann.

Ein wesentlicher Vorteil liegt darin, daß gemäß der Erfindung zunächst der Rahmen an den Anschlägen zu liegen kommt. Da der Anschlag großflächig ausgebildet ist, wirkt dieser nicht als Taster zur Abtastung der genauen Kontur, sondern legt die Position der Verputzvorrichtung bezüglich der zu bearbeitenden Schweißraupe fest. Dabei erfolgt geschickterweise diese Festlegung vor der eigentlichen spanabhebenden Bearbeitung, wodurch die Gefahr, daß ein eingeklemmter Span die genaue Positionierung des Rahmens beeinträchtigt und so auch die exakte Bearbeitung beeinträchtigt, stark minimiert ist.

Natürlich kann in einer weiteren erfindungsgemäßen Variante eine Luftspülung zum Beispiel durch entsprechende Luftdüsen vorgesehen sein, um diese Gefahr weiterhin zu reduzieren.

Nach der Erfindung wird vorgeschlagen, daß die Verputzvorrichtung zunächst in einer Richtung parallel zur Rahmenebene bewegbar ist, um die an der Verputzvorrichtung angeordenten Anschläge an den Kunststoffprofilen des Rahmens zur Anlage zu bringen und hernach die Verputzvorrichtung rechtwinklig zur Rahmenebene bewegbar ist und der Konturfräser die Schweißraupe abträgt, bis der Niederhalter auf dem Rahmen aufliegt. In dieser sehr einfachen aber effektiven und auch kostengünstigen Ausgestaltung der Erfindung, werden alle Vorteile der Erfindung realisiert. Ein zuverlässiges Arbeitsergebnis wird erreicht, wobei es auf die exakte Position des Rahmens auf dem Bearbeitungstisch nicht ankommt, da die Verputzvorrichtung durch die Beweglichkeit so positioniert wird, daß beide Anschläge an dem Kunststoffprofil anliegen.

Die erfindungsgemäße Aufgabe wird auch durch die Verwendung einer Verputzvorrichtung in einer Kunststoffrahmenverputzmaschine gelöst, die für das Entfernen von überstehenden Schweißraupen vorgesehen ist, die sich an der Schweißnaht von zusammengeschweißten Kunststoffprofilen bildet. Die Verputzvorrichtung ist dabei Teil einer komplexeren Kunststoffrahmenverputzmaschine, wie sie zum Abarbeiten beziehungsweise Nacharbeiten der Schweißwülste nach dem Verschweißen der Kunststoffprofile zu einem Rahmen eingesetzt wird. Die Erfindung ist daher nicht nur in einem Einzelgerät realisierbar, sondern erreicht insbesondere im Verbund mit anderen Elemente Vorteile, da die einfache Ausgestaltung störunanfällig ist und daher zu einer zuverlässigen Maschine führt und zum anderen aufgrund der schnellen Bearbeitung zu höheren Leistungen führt.

Die Erfindung ist schematisch in der Zeichnung dargestellt. Es zeigen:

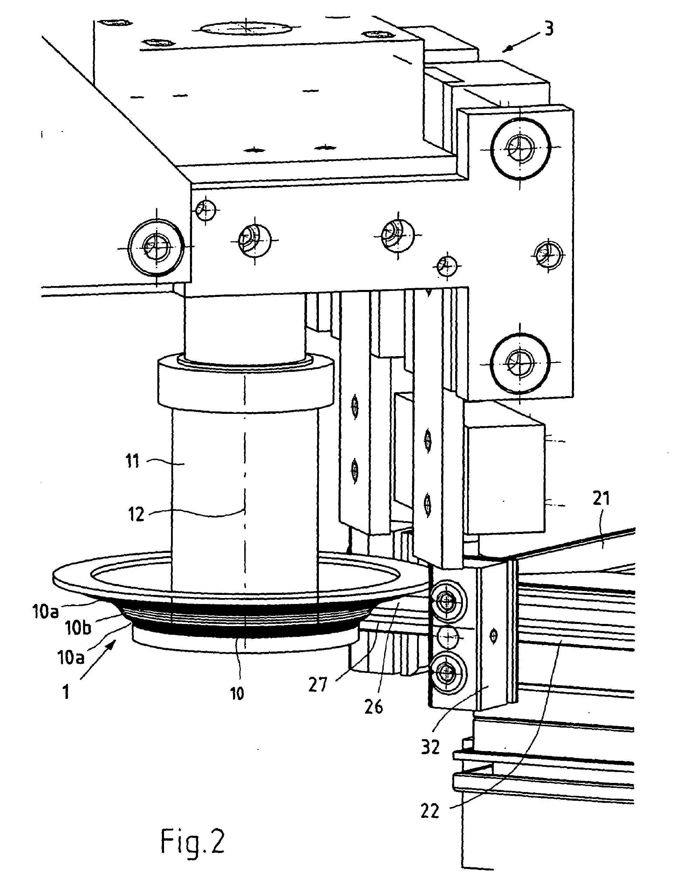

- Fig. 1, 2: je in einer dreidimensionalen Ansicht die Erfindung im Einsatz und
- Fig. 3: in einer weiteren dreidimensionalen Ansicht die Erfindung vor dem Einsatz.

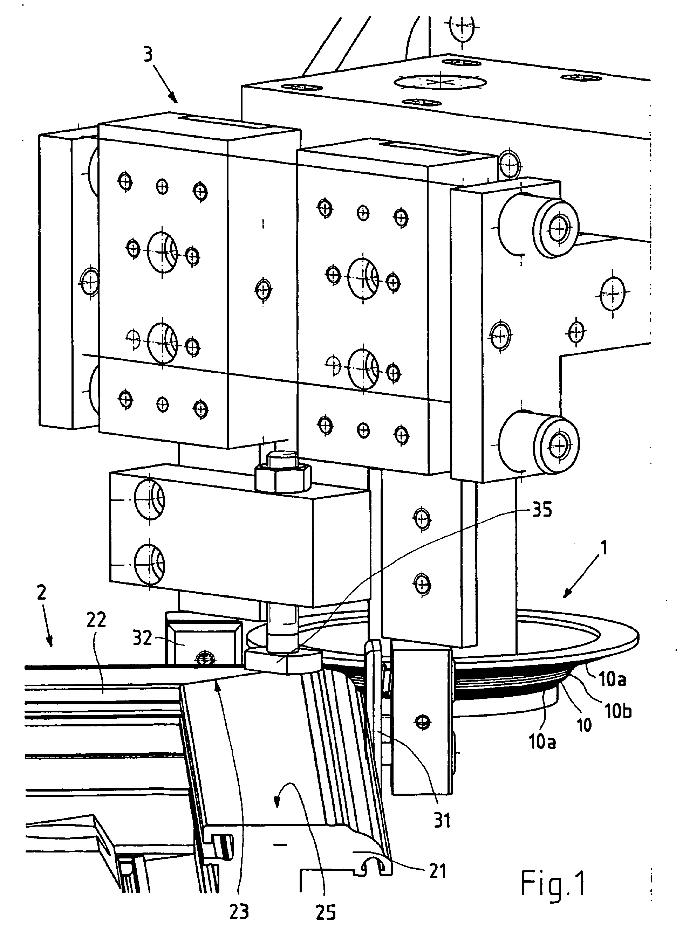

In Fig. 1 ist die Verputzvorrichtung 3 im Einsatz gezeigt. Eine im Schweißnahtbereich 23 befindliche Schweißraupe 24 ist bei der hier gezeigten Stellung bereits abgearbeitet.

Die Verputzvorrichtung 3 besteht aus einem an einem Maschinengestellt (nicht gezeigt) bewegbaren Arm, der an seinem unteren, dem Rahmen 2 zugewandten Ende Anschläge 31, 32, einen Niederhalter 35, sowie das als Konturfräser 10 ausgestaltete Werkzeug 1 trägt. Die Antriebswelle 11 wird zum Beispiel über einen Riemenantrieb durch einen Antriebsmotor in Rotation versetzt.

Es wird nachfolgend oftmals von einem Rahmen 2 gesprochen, wobei dieser auch als Rahmenteil 2 in gleichen Sinne auszulegen ist, da die Erfindung bereits bei zwei miteinander verbundenen Kunststoffprofilen 21, 22 einsetzbar ist. Der Übersichtlichkeit halber ist aber nur der hier interessierende Eckbereich gezeigt, die Erfindung ist aber sowohl auf einen Rahmen 2 wie auch auf Rahmenteile anwendbar.

Die Kunststoffprofile 21, 22 sind winklig, insbesondere rechtwinklig verschweißt. Hierzu wurden diese zunächst auf Gehrung geschnitten und an der Schweißnaht 23 verschweißt. Aufgrund des Fügeprozesses bei der Herstellung des Rahmens 2 entsteht eine sich nach außen herauswölbende Schweißraupe 24 entlang der Schweißnaht 23, die möglichst optisch neutral zu entfernen ist. Insbesondere für den Außeneckbereich 27 wird die erfindungsgemäße Verputzvorrichtung vorgesehen, wenngleich diese hierauf nicht in ihrer Anwendung beschränkt ist.

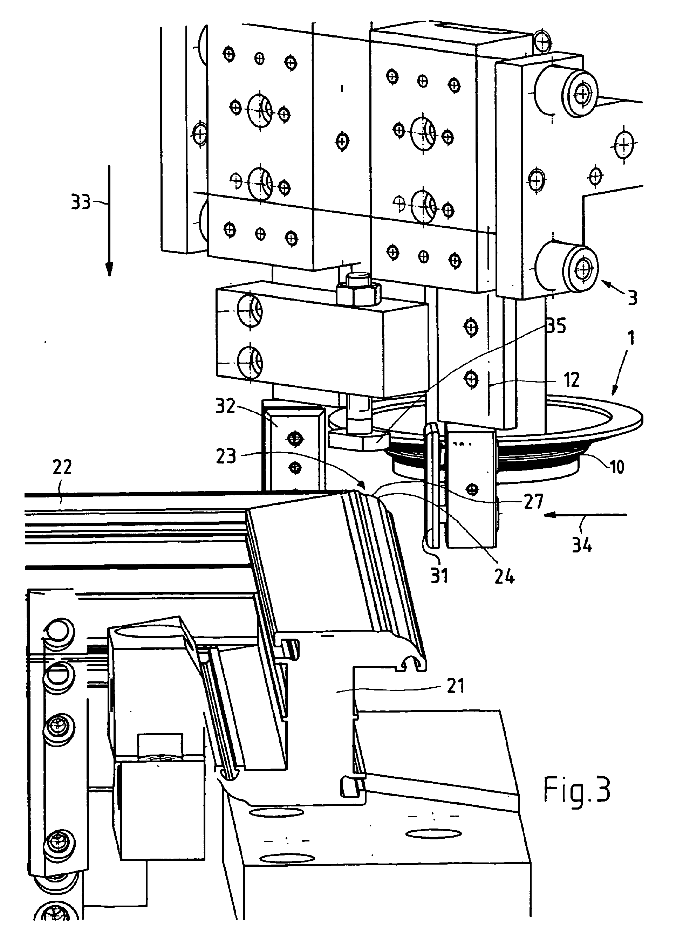

In Fig. 3 ist zunächst die Anordnung vor der Bearbeitung gezeigt. Im Schweißnahtbereich 23 befindet sich zumindest im Außeneckbereich 27 die abzuarbeitende Schweißraupe 24.

Die Verputzvorrichtung ist in zwei rechtwinklig zueinander orientierten Richtungen 33, 34 bewegbar. Günstigerweise ist eine Bewegungskomponente hierbei parallel (Pfeil 34) zur durch den Rahmen 2 beziehungsweise durch die Kunststoffprofile 21, 22 zusammengesetzten Rahmenteile definierte Rahmenebene und die andere Bewegungskomponente hierzu rechtwinklig (angedeutet durch den Pfeil 33). Für die Bewegung in die beiden Richtungen 33, 34 sind bevorzugt pneumatisch wirkende Arbeitszylinder vorgesehen, die gegebenenfalls auch gleichzeitig als Dämpfer beim Heranfahren der Anschläge/Niederhalter an den Rahmen dienen können. Der Antrieb kann aber auch anders, zum Beispiel durch Elektromotoren und dergleichen realisiert werden.

Die Verputzvorrichtung trägt an ihrem unteren Ende zwei winklig zueinander angeordnete Anschläge 31, 32. Die winklige Anordnung der Anschläge 31, 32 entspricht dabei dem Winkel wie die Kunststoffprofile 21, 22 im Rahmen 2 verschweißt sind.

Zunächst wird die Verputzvorrichtung entlang des Pfeiles 34, also parallel zur Rahmenebene herangeführt, bis beide Anschläge 31, 32 mit dem jeweiligen Kunststoffprofilen 21, 22 zur Anlage kommen. Günstigerweise wird dabei eine Richtung der Bewegungskomponente 34 gewählt, die sowohl eine Annäherung des ersten Anschlages 31 wie auch des zweiten Anschlages 32 an den Rahmen 2 ergeben. Zum Beispiel wird die Bewegungskomponente 34 parallel zur Gehrungsfläche beziehungsweise Schweißnaht 23 vorgesehen.

Liegen die Anschläge 31, 32 an den Kunststoffprofilen 21, 22 an, so ist in der Regel die Verputzvorrichtung 3 noch zu hoch und daher der Konturfräser 10 noch nicht im Eingriff am Rahmen. Im zweiten Schritt wird dann eine Bewegung entlang der Bewegungskomponente 33 (rechtwinklig zur ersten Bewegungskomponente 34) durchgeführt, also die Verputzvorrichtung 3 abgesenkt, bis der Niederhalter 35 auf der Rahmenoberfläche 25 aufliegt.

Dabei ist die Anordnung des Konturfräsers 10 bezüglich des Niederhalters 35 sowie den beiden Anschlägen 31, 32 so gewählt, daß wenn der Niederhalter 35 und die Anschläge 31, 32 auf den Rahmen beziehungsweise mit den Kunststoffprofilen zusammenwirken, also an diesen anliegen, der Konturfräser 10 exakt die vorstehende Schweißraupe 24 abarbeitet. Hierzu ist vorgesehen, daß diese Position natürlich entsprechend einstellbar ist, um das gewünschte Arbeitsergebnis zu erreichen.

Bei dieser Vorgehensweise wirkt der Niederhalter 35 als weiterer Anschlag in Richtung der Bewegung der Bewegungskomponente 33.

Da die Schweißnaht 23 entlang der Gehrungsfläche verläuft, die in einem Winkel, in der Regel dem hälftigen Verbindungswinkel der beiden Kunststoffprofile verläuft, entspricht die äußere Kontur beziehungsweise Oberflächenverlauf 26 der Profile 21, 22 im Schweißnahtbereich nicht der Kontur des Profilquerschnittes. Die Ausgestaltung der Konturfräsers 10 ist aber so geschaffen, daß sie dem Oberflächenverlauf 26 des Kunststoffprofiles 21, 22 im Schweißnahtbereich 23 entspricht. Dadurch wird ein optimales Abtragen der über die Schweißnaht 23 vorstehenden Schweißraupe 24 erreicht, ohne die Oberfläche weiter zu verletzen.

Der Konturenverlauf des Konturfräsers 10, der dem Oberflächenverlauf 26 des Kunststoffprofiles 21, 22 dem Schweißnahtbereich entspricht, wird durch eine Anordnung von Schneiden am Umfang eines den Konturfräser 10 bildenden Grundkörpers gebildet. Der Grundkörper weist entsprechend dem Oberflächenverlauf 26 des Kunststoffprofiles 21, 22 an seinem Umfang Abstufungen 10a und/oder Vorsprüngen 10b auf, so das der Grundkörper über seine Länge unterschiedlich dick ist. Zumindest jedem Abschnitt des Grundkörpers ist eine Schneide zugeordnet, wobei die Schneide dabei eine gerade oder gekrümmte Kante aufweisen kann. Eine gerade Kante der Schneide erzeugt im Außeneckbereich 27 des Kunststoffprofiles 21, 22 ebenfalls eine gerade Kante und eine gekrümmte Schneide eine gewölbte Kante. Mit der Ausbildung der Schneiden kann die Kontur der Außeneckverbindung 27 exakt profiliert werden.

Nach einer nicht dargestellten Variante der Erfindung ist der Grundkörper aus einzelnen Scheiben unterschiedlichen Durchmessers zusammengesetzt. Jede Scheibe trägt zumindest eine Schneide, die das Kunststoffprofil 21, 22 bearbeitet. Vorteilhafterweise sind die Schneiden über den gesamten Umfang des Grundkörpers bzw. der Scheiben angeordnet, so daß ein kontinuierliches Abtragen der Schweißraupe 24 gewährleistet ist.

Es ist vorgesehen, daß an der Verputzvorrichtung 3 ein Antriebsmotor für den Konturfräser 10 vorgesehen ist. Der Antriebsmotor läßt den Konturfräser 10 um die in diesem Beispiel vertikal verlaufende, beziehungsweise rechtwinklig zur Rahmenebene stehende Rotationsachse 12 rotieren.

## Patentansprüche

1. Verwendung einer Verputzvorrichtung für aus zusammengeschweißten Kunststoffprofilen bestehende Rahmen oder Rahmenteile für Fenster oder Türen, wobei die Verputzvorrichtung ein rotierendes, spanabhebendes Werkzeug aufweist, welches zum Abtragen der an der Schweißnaht der Kunststoffprofile überstehenden Schweißraupe dient, **dadurch gekennzeichnet, daß** als Werkzeug (1) ein Konturfräser (10) vorgesehen ist, dessen Kontur dem Oberflächenverlauf (26) des Kunststoffprofiles (21, 22) im Schweißnahtbereich (23) entspricht, wobei die Verputzvorrichtung (3) zunächst in einer Richtung (34) parallel zur Rahmenebene bewegbar ist, um die an der Verputzvorrichtung (3) angeordneten Anschläge (31, 32) an den Kunststoffprofilen (21, 22) des Rahmens (2) zur Anlage zu bringen und hernach die Verputzvorrichtung (3) rechtwinklig (33) zur Rahmenebene bewegbar ist, die Schweißraupe (24) abträgt bis der Niederhalter (35) auf dem Rahmen (2) aufliegt.

2. Verwendung einer Verputzvorrichtung nach Anspruch 1, **dadurch gekennzeichnet, daß** die Kontur des Konturfräsers (10) entlang seiner Rotationsachse (12) Abstufungen (10a) und/oder Vorsprünge (10b) aufweist.

3. Verwendung einer Verputzvorrichtung nach einem oder beiden der vorhergehenden Ansprüche, **dadurch gekennzeichnet, dass** der Konturfräser (10) mehrere spanabhebende Schneiden besitzt und zumindest zwei Schneiden auf Flugkreisen mit unterschiedlichem Durchmesser die Rotationsachse (12) des Konturfräsers (10) umlaufen.

4. Verwendung einer Verputzvorrichtung nach einem oder mehreren der vorhergehenden Ansprüche, **dadurch gekennzeichnet, dass** der Konturfräser (10) aus mindestens zwei Scheiben mit unterschiedlichen Durchmessern besteht und die Scheiben auf ihrem Umfang mindestens eine spanabhebende Schneide tragen.

5. Verwendung einer Verputzvorrichtung nach einem oder mehreren der vorhergehenden Ansprüche, **dadurch gekennzeichnet, dass** der Konturfräser (10) als einstückiger, rotatorischer, mit Abstufungen (10a) und/oder Vorsprüngen (10b) ausgebildeter Grundkörper mit am Umfang angeordneten Schneiden ausgebildet ist.

6. Verwendung einer Verputzvorrichtung nach einem oder mehreren der vorhergehenden Ansprüche, **dadurch gekennzeichnet, daß** die Verputzvorrichtung (3) zum Abtragen der Schweißraupe (24) am Außeneck (27) zweier winklig verschweißter Kunststoffprofile (21, 22) dient.

7. Verwendung einer Verputzvorrichtung nach einem oder mehreren der vorhergehenden Anspruch, **dadurch gekennzeichnet, daß** die Verputzvorrichtung (3) zwei winklig, bevorzugt rechtwinklig angeordnete Anschläge (31, 32) aufweist, und die Kunststoffprofile (21, 22) des Rahmens je an einem Anschlag (31, 32) anliegen.

8. Verwendung einer Verputzvorrichtung nach einem oder mehreren der vorhergehenden Ansprüche, **dadurch gekennzeichnet, daß** die Lage des Konturfräsers (10) bezüglich der Anschläge (31, 32) beziehungsweise dem Niederhalter (35) zwar einstellbar, im Einsatz der Verputzvorrichtung aber festgelegt ist.

9. Verwendung einer Verputzvorrichtung nach einem oder mehreren der vorhergehenden Ansprüche, **dadurch gekennzeichnet, daß** der Konturfräser (10) relativ zu dem Niederhalter (35) bewegbar ist und/oder der Konturfräser (10) auf der Verputzvorrichtung (3) bewegbar, insbesondere positionierbar angeordnet ist.

10. Verwendung einer Verputzvorrichtung nach einem oder mehreren der vorhergehenden Ansprüche in einer Kunststoffrahmenverputzmaschine für das Entfernen der überstehenden Schweißraupe, die sich an der Schweißnaht von zusammengeschweißten Kunststoffprofilen bildet.

## Claims

1. Use of a trimming device for frames or frame parts consisting of welded synthetic profiles for windows or doors, the trimming device having a rotating, chip removing tool which serves for removing the welding bead projecting on the weld seam of the synthetic profiles, **characterised in that** as tool (1) a profile milling cutter (10) is provided, the contour of which corresponds with the shape of the surface (26) of the synthetic profile (21, 22) in the region of the weld seam (23), wherein the trimming device (3) can be moved, first of all, in a direction (34) parallel to the plane of the frame, in order to bring the stoppers (31, 32) arranged on the trimming device (3) on the synthetic profiles (21, 22) of the frame (2) in contact, and, after that, the trimming device (3) can be moved rectangular (33) to the plane of the frame, removes the welding bead (24) until the down-holding device (35) is supported on the frame (2).

2. Use of a trimming device according to claim 1, **characterised in that** the contour of the profile milling cutter (10) has graduations (10a) and/or projections (10b) along its rotational axis (12).

3. Use of a trimming device according to one or both of the preceding claims, **characterised in that** the profile milling cutter (10) has several chip removing edges, and at least two cutting edges rotate around the rotational axis (12) of the profile milling cutter (10) in flying circles with differing diameters.

4. Use of a trimming device according to one or more of the preceding claims, **characterised in that** the profile milling cutter (10) comprises at least two discs with differing diameters, and the discs carry on their circumference at least one chip removing cutting edge.

5. Use of a trimming device according to one or more of the preceding claims, **characterised in that** the profile milling cutter (10) is formed as a one-piece rotatory basic body having graduations (10a) and/or projections (10b), and cutting edges arranged on the circumference.

6. Use of a trimming device according to one or more of the preceding claims, **characterised in that** the trimming device (3) serves for removing the welding bead (24) on the external corner (27) of two synthetic profiles (21, 22) welded angular.

7. Use of a trimming device according to one or more of the preceding claims, **characterised in that** the trimming device (3) has two stoppers (31, 32) arranged angular, preferably rectangular, and each of the synthetic profiles (21, 22) of the frame sits close to a stopper (31, 32).

8. Use of a trimming device according to one or more of the preceding claims, **characterised in that** the position of the profile milling cutter (10) may be adjustable with regard to the stoppers (31, 32) or the down-holding device (35), however, when the trimming device is in use, is fixed.

9. Use of a trimming device according to one or more of the preceding claims, **characterised in that** the profile milling cutter (10) can be moved relatively to the down-holding device (35), and/or the profile milling cutter (10) is arranged in such a way that it can be moved, in particular positioned, on the trimming device (3).

10. Use of a trimming device according to one or more of the preceding claims in a trimming machine for synthetic frames for removing the projecting welding bead which forms on the weld seam of welded synthetic profiles.

## Revendications

1. Utilisation d'un dispositif d'ébavurage de cadres et de parties de cadres formé(e)s de profilés en matière plastique soudés ensemble, destiné(e)s à des fenêtres ou des portes, le dispositif d'usinage comportant un outil en mouvement rotatif, produisant des copeaux et servant à couper le cordon de soudure produit au niveau de la soudure des profilés en plastique, **caractérisée en ce que** l'outil d'usinage (1) est une fraise contour (10) dont la forme correspond à la surface (26) du profilé en plastique (21, 22) au niveau de la soudure (23) et **en ce que** le dispositif d'ébavurage (3) peut d'abord être déplacé selon une direction (34) parallèle au plan du cadre afin de positionner les butées (31, 32) situées sur ce dispositif d'ébavurage (3) en appui contre les profilés en plastique (21, 22) du cadre (2) puis peut être déplacé perpendiculairement (33) au plan du cadre afin de couper le cordon de soudure (24) jusqu'à ce que le système de serrage (35) appuie sur le cadre (2).

2. Utilisation d'un dispositif d'ébavurage selon la revendication 1, **caractérisée en ce que** le contour de la fraise contour (10) comporte des retraits (10a) et/ou des avances (10b) le long de l'axe de rotation (12).

3. Utilisation d'un dispositif d'ébavurage selon une ou deux des revendications précédentes, **caractérisée en ce que** la fraise contour (10) possède plusieurs lames tranchantes dont au moins deux tournent autour de l'axe de rotation (12) de la fraise contour (10) sur des cercles à diamètres différents.

4. Utilisation d'un dispositif d'ébavurage selon une ou plusieurs des revendications précédentes, **caractérisée en ce que** la fraise contour (10) consiste en au moins deux disques de diamètres différents et chacun comportant au moins une lame générant des copeaux.

5. Utilisation d'un dispositif d'ébavurage selon une ou plusieurs des revendications précédentes, **caractérisée en ce que** la fraise contour (10) est un corps de rotation formé en un seul tenant incluant des retraits (10a) et/ou des avances (10b) ainsi que des lames tranchantes sur sa circonférence.

6. Utilisation d'un dispositif d'ébavurage selon une ou plusieurs des revendications précédentes, **caractérisée en ce que** le dispositif d'ébavurage (3) sert à enlever le cordon de soudure (24) au niveau de l'angle extérieur (27) de deux profilés (21, 22) soudés et formant entre eux un angle.

7. Utilisation d'un dispositif d'ébavurage selon une ou plusieurs des revendications précédentes, **caractérisée en ce que** le dispositif d'ébavurage (3) possède deux butées (31, 32) formant entre elles un angle et de préférence un angle droit et **en ce que** chacun des profilés plastique (21, 22) du cadre appuie contre une des butées (31, 32).

8. Utilisation d'un dispositif d'ébavurage selon une ou plusieurs des revendications précédentes, **caractérisée en ce que** la position relative de la fraise contour (10) est ajustable par rapport aux butées (31, 32) et au dispositif de serrage (35) mais reste fixe pendant l'utilisation du dispositif d'ébavurage.

9. Utilisation d'un dispositif d'ébavurage selon une ou plusieurs des revendications précédentes, **caractérisée en ce que** la fraise contour (10) peut être déplacée par rapport au dispositif de serrage (35) et/ou **en ce que** la fraise contour (10) peut être déplacée et en particulier positionnée sur le dispositif d'ébavurage (3).

10. Utilisation d'un dispositif d'ébavurage selon une ou plusieurs des revendications précédentes dans une machine d'ébavurage de cadres en plastique dans le but d'enlever le cordon de soudure généré par le soudage de profilés en plastique.
